# EUROPEAN PATENT SPECIFICATION

(11) **EP 3 007 163 B1**
(45) Date of publication and mention of the grant of the patent: **02.01.2019**
(21) Application number: 14804158.5
(22) Date of filing: 20.02.2014
(51) Int. Cl.: G10H 1/36, H04L 29/08

(54) **ASYNCHRONOUS CHORUS METHOD AND DEVICE**
VERFAHREN UND VORRICHTUNG FÜR EINEN ASYNCHRONEN CHOR
PROCÉDÉ ET DISPOSITIF DE CHOEUR ASYNCHRONE

(30) Priority: 30.05.2013 CN 201310210338
(43) Date of publication of application: 13.04.2016
(73) Proprietor: Xiaomi Inc., Beijing 100085 (CN)
(72) Inventor: ZHANG, Pengfei, Beijing 100085 (CN); YANG, Zhenyu, Beijing 100085 (CN); ZHANG, Xiao, Beijing 100085 (CN); LIN, Xingsheng, Beijing 100085 (CN)
(74) Representative: Delumeau, François Guy
(86) International application number: PCT/CN2014/072300
(87) International publication number: WO 2014/190786

(56) References cited:
- EP-A1- 2 337 018
- CN-A- 101 345 047
- CN-A- 101 345 047
- CN-A- 102 456 340
- CN-A- 102 456 340
- CN-A- 103 021 401
- CN-A- 103 295 568
- CN-A- 103 295 568
- DE-A1-102008 008 388
- JP-A- 2005 010 639
- JP-A- 2006 208 961
- TW-A- 201 228 290
- US-A- 5 235 124
- US-A1- 2007 163 428
- US-A1- 2011 144 981

## Description

### TECHNICAL FIELD

The embodiments of the present disclosure relate to the field of network technology, and more particularly to a method and a device for asynchronously chorusing.

### BACKGROUND

Along with high-speed developments of smart mobile terminals, functions of smart mobile terminals are more and more enriched. Presently, mobile terminals have social Karaoke applications therein, which have built-in reverb and echo effects that are capable of modifying and decorating user's voices. In the applications, in addition to accompanying music, lyrics corresponding to the accompanying music are also provided which may be displayed synchronously when singing in Karaoke and just as precise for every word as that in KTV. Moreover, interesting smart scoring functions, which are allowable for the scores to be shared with friends, are also provided in the applications.

European patent application EP2337018 discloses a collaborative singing method, including an initiator receiving an original music and creating a reference performance schedule. The method then sends the performance schedule to every participating terminal to perform individual performances of selected portions of the original music. The performances are then combined into a karaoke collage.

At present, generally only one person plays Karaoke by oneself on a mobile terminal, and then submits the finished song to a server so as to be saved and represented, such that other users using this application may play this finished song and make comments. If a lot of people want to perform chorus, they need to sing one song at the same time on the same mobile terminal, and then submit the finished song to the server so as to be saved.

However, in the above method for chorusing, many users are required to sing one song at the same time on the same mobile terminal and then submit the finished song to a server so as to be processed, while in chorusing the user's voice may be different from each other in volumes and distances, and thus resulting in bad chorusing effects. Further, if one user in chorusing behaves not so well, that song may need to be chorused again and to be re-processed by the server after chorusing, and thus resulting in cumbersome processing courses with high costs.

### SUMMARY

The embodiments of the present disclosure provides a method and a device for asynchronously chorusing, so as to solve the problems of bad chorusing effects, cumbersome processing courses and high costs.

According to a first aspect of the embodiments of the present disclosure, an embodiment of the present application discloses a method for asynchronously chorusing according to Claim 1.

According to a third aspect of the embodiments of the present disclosure, the present disclosure also discloses a device for asynchronously chorusing according to Claim 5.

According to a third aspect of the embodiments of the present disclosure, there is provided a computer program product stored on a computer usable medium, comprising computer-readable program means for causing an electronic device to implement the method according to the above first aspect.

The technology solutions provided by the embodiments of the present disclosure may include benefit effects as below:
In the method for asynchronously chorusing provided In the embodiments of the present disclosure, after receiving an audio file uploaded from a terminal that requests a first accompanying music file to take part in chorusing, marking an unmarked, audio mixing portion in the audio file as a chorused portion; and determining the marked audio file as a second accompanying music file; wherein the audio file is formed by encoding collected audio information with the first accompanying music file downloaded by the terminal that requests the first accompanying music file to take part in chorusing. When one user is in chorusing, the user's terminal may download other user's audio file of chorusing as his own accompanying music file of chorusing, therefore the chorus participants may respectively sing their own portions at different times and in different places, without leading to bad chorusing effect due to crowded people or voice differences in voice volume or distances. In addition, every user may sing many times or process his own singing portion independently while singing his own portion without affecting the singing portions of other users. In this way, it may be avoided that a song has to be chorused again due to poor performance of one user in chorusing.

It is understood that the above general description and afterward detailed description are only exemplary, and not to limit the present disclosure.

### BRIEF DESCRIPTION OF THE DRAWINGS

The accompanying drawings here are incorporated into and as a part of the specification to illustrate the embodiments in compliance with the present application, and to explain the principles of the present application together with the specification.
Fig. 1 is a flow chart showing a method for asynchronously chorusing proposed according to a first exemplary embodiment;
Fig. 2 is a flow chart showing a method for asynchronously chorusing proposed according to a second exemplary embodiment;
Fig. 3 is a flow chart showing a method for asynchronously chorusing proposed according to a third exemplary embodiment;
Fig. 4 is a flow chart showing a method for asynchronously chorusing proposed according to a fourth exemplary embodiment;
Fig. 5 is a diagram showing a marked initial accompanying music file proposed according to a fifth exemplary embodiment;
Fig. 6 is a structural block diagram showing a device for asynchronously chorusing according to a sixth exemplary embodiment;
Fig. 7 is a structural block diagram showing a device for asynchronously chorusing according to a seventh exemplary embodiment;
Fig. 8 is a structural block diagram showing a device for asynchronously chorusing according to an eighth exemplary embodiment;
Fig. 9 is a structural block diagram showing a device for asynchronously chorusing according to a ninth exemplary embodiment.

### DESCRIPTION OF THE EMBODIMENTS

Detailed description of the present disclosure will further be made with reference to drawings and embodiments in order to make the above features, technical solutions and advantages of the present disclosure become clearer.

In the method and the device for asynchronously chorusing proposed by the present application, chorus participants may respectively sing their own portions at different times and in different places, therefore there is no bad chorusing effect which may be caused by the crowded people or by the differences in voice volumes and distances, and every user may process his own singing portion independently without affecting influences on the singing portions of other users.

The first embodiment:
At present, when performing chorusing, many users are required to sing one song at the same time on the same mobile terminal and then submit the finished song to a server so as to be processed, while in chorusing the user's voice may be different from each other in volumes and distances, and thus resulting in bad chorusing effects. Further, if one user in chorusing behaves not so well, that song may need to be chorused again and to be re-processed by the server after chorusing, and thus resulting in cumbersome processing courses with high costs.

As for the above problems, an embodiment of the present disclosure proposes a method for asynchronously chorusing which may solve the above problems.

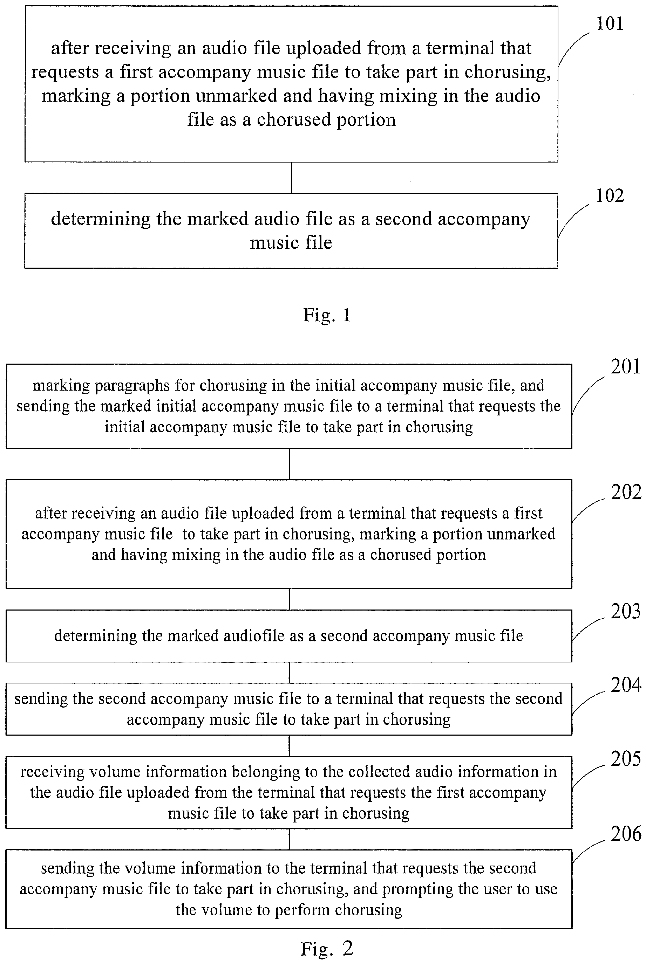

Referring to Fig. 1, which illustrates a flow chart showing a method for asynchronously chorusing according to a first exemplary embodiment, the method may include: in step 101, after receiving an audio file uploaded from a terminal that requests a first accompanying music file to take part in chorusing, an unmarked, audio mixing portion in the audio file is marked as a chorused portion.

In the embodiments of the present disclosure, when many users are in chorusing, the chorusing may be performed by using different terminals. The terminals proposed by the embodiments of the present disclosure may be a smart mobile phone, a panel computer or the like.

When a user of the terminal that requests a first accompanying music file to take part in chorusing is in chorusing, firstly the user may download the first accompanying music file from the server, then audio information of this user may be collected by the terminal that requests the first accompanying music file to take part in chorusing, and an audio file corresponding to the terminal that requests the first accompanying music file to take part in chorusing is formed by encoding the collected audio information with the first accompanying music file downloaded by the terminal that requests the first accompanying music file to take part in chorusing so as to be uploaded to the server.

After the server receives the audio file uploaded from the terminal that requests the first accompanying music file to take part in chorusing, the unmarked, audio mixing portion in the audio file may be marked as the chorused portion; wherein the above audio file is formed by encoding the collected audio information with the first accompanying music file downloaded by the terminal that requests the first accompanying music file to take part in chorusing.

The method also includes a step 102, in which the marked audio file is determined as a second accompanying music file.

After marking the above audio file uploaded from the terminal that requests the first accompanying music file to take part in chorusing, the marked accompanying music file may be determined as a second accompanying music file. When a user of the terminal that requests the second accompanying music file to take part in chorusing is in chorusing, the above second accompanying music file may be downloaded from the server, and the second accompanying music file is used directly to take part in chorusing.

The specific procedures of the above steps will be explained in detail in the second embodiment as below.

In the embodiments of the present disclosure, when one user is in chorusing, the user's terminal may download other user's audio file of chorusing as his own accompanying music file for chorusing, therefore the chorus participants may respectively sing their own portions at different times and in different places, without leading to bad chorusing effect due to crowded people or voice differences in voice volume or distances. In addition, every user may sing many times or process his own singing portion independently while singing his own portion without affecting the singing portions of other users. In this way, it may be avoided that a song has to be chorused again due to poor performance of one user in chorusing.

The second embodiment:
Now the method for asynchronously chorusing in the first embodiment as above is explained in detail by the second embodiment of the present disclosure.

Referring to Fig. 2, which illustrates a flow chart showing a method for asynchronously chorusing proposed according to a second exemplary embodiment, the method may include: in step 201, paragraphs for chorusing in the initial accompanying music file are marked, and the marked initial accompanying music file is sent to a terminal that requests the initial accompanying music file to take part in chorusing.

In the embodiment of the present disclosure, the initial accompanying music file may firstly be marked, and the marked initial accompanying music file is sent to a terminal that requests the initial accompanying music file to take part in chorusing, wherein the marked initial accompanying music file may include at least one paragraph.

In one embodiment, the initial accompanying music file may be marked in a way of reading time intervals. Therefore the procedure of the above marking paragraphs for chorusing in the initial accompanying music file may include: a1, reading a time interval between every two words in the initial accompanying music file; a2, comparing the above time interval with a preset threshold value; and a3, when the time interval between two words is larger than the preset threshold value, marking a paragraph as being finished between two words.

The marking proposed in the embodiments of the present disclosure may mark a special symbol such as a dot between two words, in this time the two words exist in two paragraphs in the accompanying music file, the special symbol may be used to mark one paragraph as being finished, or used to distinguish singings between male and female. Between two words "male:' or 'female:' is marked. In this time, the two words exist in two paragraphs in the accompanying music file. The marked "male:" or "female:"may be used to mark one paragraph as being finished.

Of course, the initial accompanying music file may be marked in other ways, such as using different colors for marking, etc. The embodiment of the present disclosure is not limited thereto.

For example, by using the way of the marked "male:" or "female:", the following lyrics may be marked as below:
"female: Clear is my heart
desire for a true love
once broken for love
why sweet dreams not come true
male: you have a pair of gentle eyes
you have a compassionate heart
if you wish, please let me get closer
I think you'll understand my heart".

The accompanying music file is marked by judging a time interval between every two words, such that the marking may be performed more precisely. As for the specific value of the preset threshold value, it may be set by those skilled in the art according to actually experiences.

Of course, the embodiments of the present disclosure may also mark the initial accompanying music file in many other ways, for example, according to a tone level (high or low) of the accompanying music, etc. The embodiment of the present disclosure is not limited thereto.

The method also includes a step 202, in which an unmarked, audio mixing portion in the audio file is marked as a chorused portion, after receiving an audio file uploaded from the terminal that requests a first accompanying music file to take part in chorusing.

In the embodiments of the present disclosure, one song may be chorused by many users with different terminals. When a user of each terminal that requests to take part in chorusing is in chorusing, the terminal that requests to take part in chorusing may collect the user's audio information, then form an audio file by encoding the audio information with the accompanying music file downloaded by the terminal that takes part in chorusing, and finally may upload the formed encoded audio file to the server.

In the embodiments of the present disclosure, after the server receives the audio file uploaded from the terminal that requests to take part in chorusing, the unmarked, audio mixing portion in the audio file may be marked as a chorused portion.

The procedures of the marking the unmarked, audio mixing portion in the audio file as a chorused portion may include: b1, obtaining the audio information position in the audio file; b2, analyzing a portion having mixing in the audio information position, wherein the portion having mixing is formed by encoding collected audio information with the first accompanying music file; and b3, marking the unmarked, audio mixing portion in the audio file as the chorused portion.

In the embodiment of the present disclosure, the marking the unmarked, audio mixing portion in the audio file may be performed in a way as below:
changing colors of displayed words corresponding to the unmarked, audio mixing portion in the audio file (for example, the color of the displayed words corresponding to the portion having no mixing in the audio file is black, then the color of displayed words corresponding to the unmarked, audio mixing portion in the audio file is marked as red); or using words to mark the unmarked, audio mixing portion in the audio file (for example, the words may be used in the name of the audio file to explain which portion has been sung) in a name of the audio file. Of course, the unmarked, audio mixing portion in the audio file may also be marked by using both of the above two kinds of marking. The embodiment of the present disclosure is not limited thereto.

In the embodiments of the present disclosure, the unmarked, audio mixing portion in the audio file may be marked as the chorused portion by other ways, for example, by overstriking the words corresponding to the unmarked, audio mixing portion, etc. The embodiment of the present disclosure is not limited thereto.

The method also includes a step 203, in which the marked audio file is determined as a second accompanying music file.

After marking the audio file, the marked audio file may be determined as the second accompanying music file, the user of the terminal that requests the second accompanying music file to take part in chorusing may perform chorusing according to the second accompanying music file.

The method also includes a step 204, in which the second accompanying music file is sent to the terminal that requests the second accompanying music file to take part in chorusing.

When the terminal that requests the second accompanying music file to take part in chorusing requests chorusing requests the chorusing, the server may send the determined second accompanying music file to the terminal that requests the second accompanying music file to take part in chorusing. Since different paragraphs are marked in the initial accompanying music file, the user of the terminal that requests the second accompanying music file to take part in chorusing may perform chorusing according to a paragraph of the marked chorusing in the initial accompanying music file corresponding to the user itself, and according to the marked chorused portion in the downloaded second accompanying music file.

After the terminal that requests the second accompanying music file to take part in chorusing collects the user's audio information, the collected audio information and the second accompanying music file may be encoded to generate the audio file, and the audio file is uploaded to the server, then the audio file uploaded from the terminal that requests the second accompanying music file is marked to take part in chorusing. The above procedures are performed repeatedly.

The method also includes a step 205, in which volume information belonging to the collected audio information in the audio file uploaded from the terminal that requests a first accompanying music file is received to take part in chorusing.

In order to further improve the effects of chorusing, a way of recording the voice volume may be adopted in the embodiments of the present disclosure. When one user of the terminal that requests to take part in chorusing is in chorusing, the terminal may record the volume information of the collected audio information, and then upload the volume information of the collected audio information to the server.

Therefore, in the embodiment of the present disclosure, after an audio file uploaded from the terminal that requests the first accompanying music file to take part in chorusing is received, the volume information belonging to the collected audio information in the audio file uploaded from the terminal that requests a first accompanying music file to take part in chorusing may also be received.

The method also includes a step 206, in which the volume information is sent to the terminal that requests the second accompanying music file to take part in chorusing, and the user is prompted to use the volume to perform chorusing.

After the server receives the volume information uploaded from the above terminal that requests the first accompanying music file to take part in chorusing, the volume information may be sent to the terminal that requests the second accompanying music file to take part in chorusing, therefore the user of the terminal may be prompted to use the above volume to perform chorusing.

With the volume prompting, the user of the terminal that requests the second accompanying music file to take part in chorusing may adjust his own chorusing volume according to the volume of the user of the terminal that requests the first accompanying music file to take part in chorusing, thereby further improving the effects of chorusing.

The above step 205-step 206 may also be performed before step 203; or, step 203 and step 205 may be performed in parallel, step 204 and step 206 may be performed in parallel, etc. The embodiment of the present disclosure is not limited to the specific orders in the above steps.

In the method for asynchronously chorusing proposed by the embodiments of the present disclosure, the chorus participants may respectively sing their own portions at different times and in different places, without leading to bad chorusing effect due to crowded people or voice differences in voice volume or distances. In addition, every user may sing many times or process his own singing portion independently while singing his own portion without affecting the singing portions of other users. In addition, the embodiments of the present disclosure may also record the volume information when a user of the last terminal that requests to take part in chorusing performs chorusing, and prompt a user of the next terminal that requests to take part in chorusing to use this volume to perform chorusing, therefore the effects of chorusing may be further improved.

In the above first embodiment and the second embodiment, the method for asynchronously chorusing is mainly introduced from the server side, now it is introduced from the terminal side in the third embodiment and the fourth embodiment.

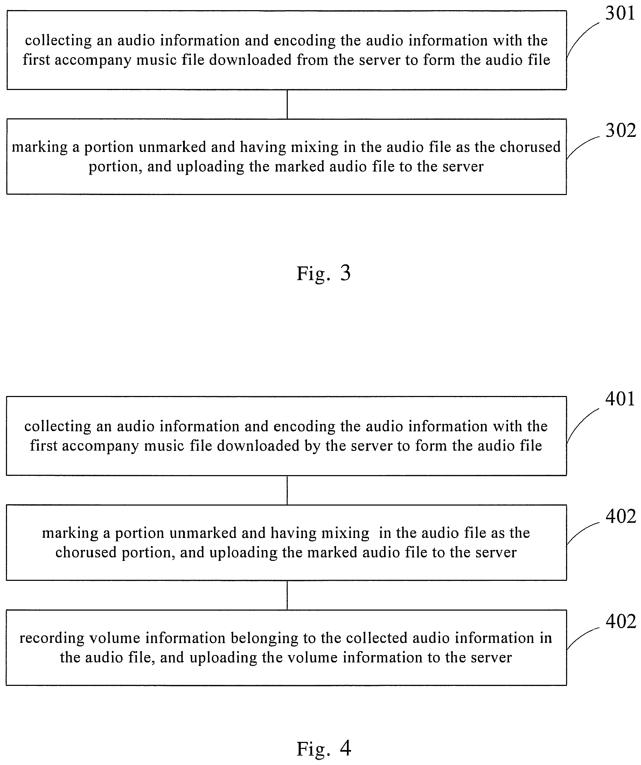

The third embodiment:
Referring to Fig. 3, which illustrates a flow chart showing a method for asynchronously chorusing proposed according to a third exemplary embodiment, the method may include: in step 301, audio information is collected, and an audio file is formed by encoding audio information with the first accompanying music file downloaded from the server.

When the terminal that requests a first accompanying music file to take part in chorusing requests to take part in chorusing requests for taking part in the chorusing, firstly a first accompanying music file may be downloaded from the server, then the terminal may collect the user's audio information when the user is performing chorusing, and then an audio file is formed by encoding the audio information with the first accompanying music file downloaded from the server.

The method also includes a step 302, in which the unmarked, audio mixing portion in the audio file is marked as a chorused portion, and the marked audio file is uploaded to the server.

After the terminal encodes and forms the audio file, the unmarked, audio mixing portion in the audio file may be marked as the chorused portion, and the marked audio file is uploaded to the server.

After the server receives the marked audio file, the marked audio file may be used as a second accompanying music file. The second accompanying music file may be downloaded from the server by the terminal that requests the second accompanying music file to take part in chorusing, and the second accompanying music file may be used directly to take part in chorusing.

As for the specific procedures respectively in the above steps, it will be explained in detail in the fourth embodiment.

In the embodiment of the present disclosure, when one user is in chorusing, the user's terminal may download the audio file of other user's chorusing as his own accompanying music file for chorusing, therefore the chorus participants may respectively sing their own portions at different times and in different places, without leading to bad chorusing effect due to crowded people or voice differences in voice volume or distances.

The fourth embodiment:
Now the method for asynchronously chorusing in the third embodiment as above is explained in detail by the fourth embodiment of the present disclosure

Referring to Fig. 4, which illustrates a flow chart showing a method for asynchronously chorusing proposed according to a fourth exemplary embodiment, the method may include: in step 401, audio information is collected, and an audio file is formed by encoding the audio information with the first accompanying music file downloaded from the server.

The terminal that requests a first accompanying music file to take part in chorusing may collect the user's audio information for chorusing, then form the audio file by encoding the audio information with the first accompanying music file downloaded from the server.

The method also includes a step 402, in which the unmarked, audio mixing portion in the audio file is marked as a chorused portion, and the marked audio file is uploaded to the server.

In the embodiments of the present disclosure, the above marking procedures may be accomplished by the terminal that requests to take part in chorusing. The procedures of the above marking the unmarked, audio mixing portion in the audio file as the chorused portion may include: c1, obtaining the audio information position in the audio file; c2, analyzing the portion having mixing in the audio information position, wherein the portion having mixing is formed by encoding the collected audio information with the first accompanying music file; and c3, marking the unmarked, audio mixing portion in the audio file as the chorused portion.

In the embodiment of the present disclosure, the marking the unmarked, audio mixing portion in the audio file as the chorused portion in step c3 as above may be accomplished in a way as below: changing colors of displayed words corresponding to the unmarked, audio mixing portion in the audio file are changed; or, words may be used in the name of the audio file to mark the unmarked, audio mixing portion in the audio file.

Of course, in the embodiment in the present disclosure, the unmarked, audio mixing portion in the audio file may be marked by simultaneity using the above two kinds of marking.

The method also includes a step 403, in which volume information belonging to the collected audio information in the audio file is recorded, and the volume information is uploaded to the server.

In order to further improve the effects of chorusing, a way of reminding the voice volume may be adopted in the embodiments of the present disclosure. When one user of the terminal that requests to take part in chorusing is in chorusing, the terminal may record the volume information of the collected audio information, and then upload the volume information of the collected audio information to the server.

After the server receives the volume information uploaded from the above terminal that requests a first accompanying music file to take part in chorusing, the above marked audio file may be used as the second accompanying music file. When the user of the terminal that requests the second accompanying music file to take part in chorusing is in chorusing, the second accompanying music file may be downloaded directly from the server for chorusing and the above volume information may be obtained simultaneously, so as to prompt the user to use this volume for performing chorusing.

The above respective procedures in the embodiment of the present disclosure is not limited to be performed by the terminal that requests the first accompanying music file to take part in chorusing, and may be performed by any of other terminals.

The embodiments of the present disclosure may record the volume information when a user of the last terminal that requests to take part in chorusing performs chorusing, and prompt a user of the next terminal that requests to take part in chorusing to use this volume to perform chorusing, therefore the effects of chorusing may be further improved.

The fifth embodiment:
Now the above method for asynchronously chorusing is introduced by one disclosed example.

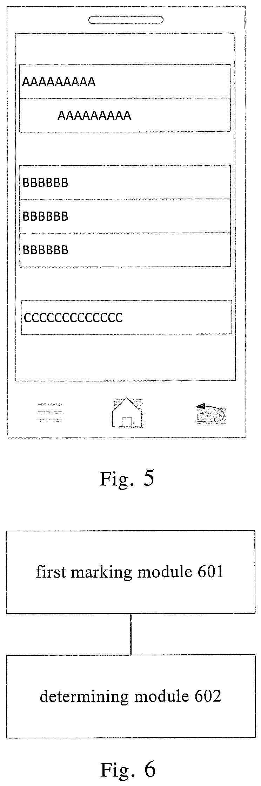

Firstly, after the server marks the initial accompanying music file by the server, the marked initial accompanying music file is shown as in Fig. 5. It can be seen from Fig. 5 that the marked initial accompanying music file may include three portions A, B, and C, which may be sung by users of three terminals respectively. For example, a portion marked A may be sung by the terminal of a user A, a portion marked B may be sung by the terminal of a user B, and a portion marked C may be sung by the terminal of a user C. As for the specific procedures of marking, it will be explained in the specification from the server side.

Now the method for asynchronously chorusing proposed by the embodiment of the present disclosure is explained respectively from the terminal side and from the server side.

On the terminal side:
1. The terminal of the user A downloads the above marked initial accompanying music file from the server and plays it, the user A sings a portion marked A therein. The terminal of the user A collects the audio information of the user A, and records the volume information of the audio information of the user A. The terminal of the user A encodes the collected audio information and the above initial accompanying music file, and generates a song X1 (i.e., the audio file), and uploads the song X1 and the above volume information of the user A to the server.
2. The terminal of the user B downloads the song X1 from the server, plays it and uses it as an accompanying music, and prompts the user B the volume of singing (for example, by prompting in a form of waveform) according to the volume information of the above the user A. The user B continues to sing a portion marked B therein. The terminal of the user B collects the audio information of the user B, and records the volume information of the user B. The terminal of the user B encodes the collected audio information and the above song X1, generates a song X2 and uploads the song X2 and the above volume information of the user B to the server.
3. The terminal of the user C downloads the song X2 from the server, plays it and uses it as an accompanying music, and prompts the user C the volume of singing according to the above volume information of the user B. The user C continues to sing a portion marked C therein, and records the volume information of the audio information of the user C. The terminal of the user C encodes the collected audio information and the above song X2, generates a song X3 and uploads the song X3 and the above volume information of the user C to the server, thereby finishing the whole song.

On the server side:
Wherein it mainly includes two portions as below:
I. The initial accompanying music file is marked, i.e., to mark different portions for the initial accompanying music file.
   For example, the initial accompanying music file may be marked manually, or be marked according to a time interval between lyrics of the song. Of course, the initial accompanying music file may be marked in other ways. The embodiment of the present disclosure is not limited thereto. For the specific procedures of marking, it may refer to the related description in the above second embodiment. The embodiment of the present disclosure is not explained in detail here;
   In the embodiments of the present disclosure, the initial document may be marked as three portions, as shown in Fig. 3, namely, as portion A, portion B and portion C;
II. The song uploaded from the terminal (i.e., the audio file) is processed.
   i. When the song uploaded is received by the terminal, the sung portion in the song is determined according to the audio information position of the song; for example, a portion having mixing in the song may be analyzed, of which the specific procedures may refer to the related description in the above second embodiment;
   ii. The uploaded song is further marked according to the marking of the initial accompanying music file and the determined sung portion in the received uploaded song;
      Taking the song XI as an example, different colors may be used to mark the lyrics of a sung portion A therein; or the name of the song X1 is marked to indicate that the portion A has been sung. The color of the lyrics and the name of the song may be marked simultaneously; and
   iii. Sending the marked song and the volume information uploaded from the current terminal is sent to the next terminal of requesting.

In the embodiment of the present disclosure, the above marking procedures are accomplished by the server. It needs to be explained that the marking procedures may also be accomplished by the terminal. The embodiment of the present disclosure is not limited thereto.

The embodiment of the present disclosure has benefit effects as below:
(1) the chorus participants may sing their own portions in different times at different positions;
(2) every user may sing many times or process his own singing portion independently while singing his own portion without affecting influences on the singing portions of other users (for example, a mixing or other voice effects may be offered, the user's own portion of singing may have special effects while other user's voices are unchanged); and
(3) it is not possible that the chorusing effects go worse for a reason of crowded people.

The above method embodiment is, for the sake of simple description, interpreted as a combination of a series of actions. However it should be known by those skilled in the art that the present disclosure is not limited to the orders of the described actions. According to the present disclosure, some steps may take other orders or be performed simultaneously. Secondly, it should also be known by those skilled in the art that, the described embodiments in the specification are all belong to preferred embodiments, the related actions are not necessarily to be needed in the present disclosure.

The sixth embodiment:
Referring to Fig. 6, which illustrates a structural block diagram showing a device for asynchronously chorusing according to a sixth exemplary embodiment, the device may be a device on the server side, and interact with the one on the terminal side.

The above device may include:
a first marking module 601 configured to mark an unmarked, audio mixing portion in an audio file as a chorused portion, after receiving the audio file uploaded from a terminal that requests a first accompanying music file to take part in chorusing; and
a determining module 602 configured to determine the marked audio file as a second accompanying music file;
wherein the audio file is formed by encoding collected audio information with the first accompanying music file downloaded by the terminal that requests the first accompanying music file to take part in chorusing.

In the embodiments of the present disclosure, when one user is in chorusing, the user's terminal may download the audio file of other user's chorusing as his own accompanying music file for chorusing, therefore the chorus participants may respectively sing their own portions at different times and in different places, without leading to bad chorusing effect due to crowded people or voice differences in voice volume or distances. In addition, every user may sing many times or process his own singing portion independently while singing his own portion without affecting the singing portions of other users. In this way, it may be avoided that a song has to be chorused again due to poor performance of one user in chorusing.

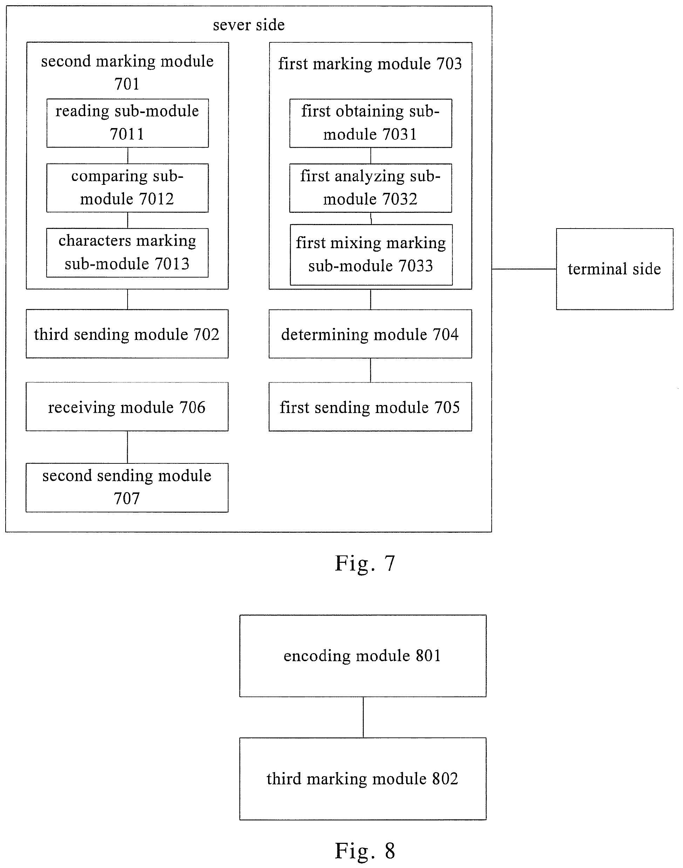

The seventh embodiment:
Referring to Fig. 7, which illustrates a structural block diagram showing a device for asynchronously chorusing according to a seventh exemplary embodiment, the device may be a device on the server side, and interact with the one on the terminal side.

The device may include: a second marking module 701 configured to mark paragraphs for chorusing in the initial accompanying music file.

The second marking module 701 may include: a reading sub-module 7011 configured to read a time interval between every two words in the initial accompanying music file; a comparing sub-module 7012 configured to compare the time interval with a preset threshold value; a words marking sub-module 7013 configured to mark a paragraph as being finished between two words when the time interval between two words is large than the preset threshold value; and a third sending module 702 configured to send the initial accompanying music file marked by the second marking module to a terminal that requests the initial accompanying music file to take part in chorusing; wherein the marked initial accompanying music file includes at least one paragraph.

The device may also include a first marking module 703 configured to mark an unmarked, audio mixing portion in an audio file as the chorused portion, after receiving the audio file uploaded from a terminal that requests a first accompanying music file to take part in chorusing.

The first marking module 703 may include: a first obtaining sub-module 7031 configured to obtain an audio information position in the audio file; a first analyzing sub-module 7032 configured to analyze the portion having mixing in the audio information position, wherein the portion having mixing is formed by encoding collected audio information with the first accompanying music file; and a first mixing marking sub-module 7033 configured to mark an unmarked, audio mixing portion in the audio file as the chorused portion.

The first mixing marking sub-module 7033 may include: a first changing sub-unit configured to change colors of displayed words corresponding to the unmarked, audio mixing portion in the audio file; and/or, a first marking sub-unit configured to use words to mark the unmarked, audio mixing portion in the audio file in a name of the audio file.

The device may also include: a determining module 704 configured to determine the marked audio file as a second accompanying music file; wherein the audio file is formed by encoding collected audio information with the first accompanying music file downloaded by the terminal that requests the first accompanying music file to take part in chorusing.

The device may also include: a first sending module 705 configured to send the second accompanying music file to the terminal that requests the second accompanying music file to take part in chorusing; a receiving module 706 configured to receive volume information belonging to the collected audio information in the audio file uploaded from the terminal that requests the first accompanying music file to take part in chorusing, after receiving the audio file uploaded from the terminal that requests the first accompanying music file to take part in chorusing; and a second sending module 707 configured to send the volume information to the terminal that requests the second accompanying music file to take part in chorusing, and to prompt the user to use the volume to perform chorusing.

In the embodiment of the present disclosure, when one user is in chorusing, the user's terminal may download the audio file of other user's chorusing as his own accompanying music file for chorusing, therefore the chorus participants may respectively sing their own portions at different times and in different places, without leading to bad chorusing effect due to crowded people or voice differences in voice volume or distances. In addition, the embodiments of the present disclosure may also record the volume information when a user of the last terminal that requests to take part in chorusing performs chorusing, and prompt a user of the next terminal that requests to take part in chorusing to use this volume to perform chorusing, therefore the effects of chorusing may be further improved.

The eighth embodiment:
Referring to Fig. 8, which illustrating a structural block diagram showing a device for asynchronously chorusing according to an eighth exemplary embodiment, the device may be a device on the terminal side, and interact with the one on the server side.

The above device may include: an encoding module 801 configured to collect audio information, and form an audio file by encoding the audio information with the first accompanying music file downloaded from the server; and a third marking module 802 configured to mark an unmarked, audio mixing portion in the audio file as a chorused portion, and upload the marked audio file to the server.

In the embodiments of the present disclosure, when one user is in chorusing, the user's terminal may download other user's audio file of chorusing as his own accompanying music file for chorusing, therefore chorus participants may respectively sing their own portions at different times and in different places, thus there is no bad chorusing effect which may be caused by the crowded people or by the differences in voice volumes and distances.

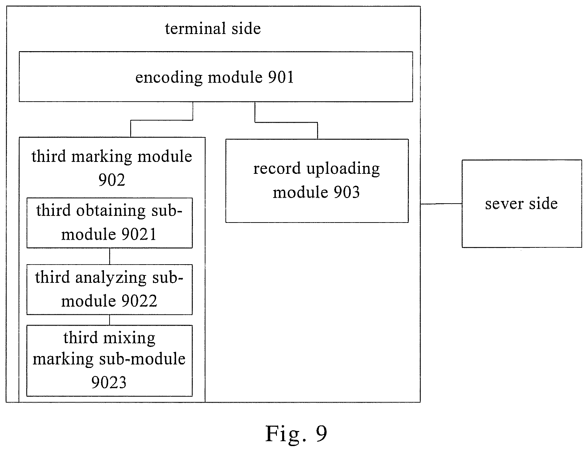

The ninth embodiment:
Referring to Fig. 9, which illustrates a structural block diagram showing a device for asynchronously chorusing according to a ninth exemplary embodiment, the device may be a device on the terminal side, and interact with the one on the server side..

The above device may include: an encoding module 901 configured to collect audio information, and form an audio file by encoding the audio information with the first accompanying music file downloaded from the server; and a third marking module 902 configured to mark an unmarked, audio mixing portion in the audio file as the chorused portion, and upload the marked audio file to the server.

The third marking module 902 may include: a third obtaining sub-module 9021 configured to obtain an audio information position in the audio file; a third analyzing sub-module 9022 configured to analyze the portion having mixing in the audio information position, wherein the portion having mixing is formed by encoding a collected audio information with the first accompanying music file; and a third mixing marking sub-module 9023 configured to mark an unmarked, audio mixing portion in the audio file as the chorused portion.

The third mixing marking sub-module 9023 may include: a third changing sub-unit configured to change colors of displayed words corresponding to the unmarked, audio mixing portion in the audio file; and/or, a third marking sub-unit configured to use words to mark the unmarked, audio mixing portion in the audio file in a name of the audio file.

The device may also include: a record uploading module 903 configured to record the volume information belonging to the collected audio information in the audio file and upload the volume information to the server, after uploading the marked audio file to the server.

The embodiments of the present disclosure may record the volume information when a user of the last terminal that requests to take part in chorusing performs chorusing, and prompt a user of the next terminal that requests to take part in chorusing to use this volume to perform chorusing, therefore the effects of chorusing may be further improved.

As for the above respective device embodiments, since they are substantially similar to the method embodiments, the description thereof are relatively simple, and the correlated portions thereof may refer to the descriptions for the corresponding portions in the method embodiments.

Respective embodiments in this description are described in a step-up manner. For every embodiment, its differences from other embodiments are illustrated for emphasis, and the same or similar parts between respective embodiments are referred to each other.

It is easy to be conceived by those skilled in the art that: the arbitrary combinations and applications of the above respective embodiments are usable, thus the arbitrary combinations of the above respective embodiments are all solutions implemented by the present application. However, for the sake of the limitation of the article's length, they are not described in detail one by one in the present specification.

The present application may be described in the general contexts of the computer executable instructions performed by the computer, such as in the program modules. Generally, the program modules include routines, programs, objects, components, data structures and the like for performing specific tasks or accomplishing specific abstract data types. The present application may also be accomplished in a distributed computing environment. In those distributed computing environments, the tasks are performed by remote processing equipments connected in communication networks. In those distributed computing environments, the program modules may be located in the local and remote computer storage media including storage devices.

Finally, it should be further noted that, those terms indicating relation such as "first" and "second" herein are only used to distinguish an entity or operation from another entity or operation, rather than requiring or implying any actual relation or order existed between these entities or operations. Moreover, the terms such as "comprise", "include" or any other varieties intend to cover a non-exclusive inclusion, such that a process, a method, a product, or a terminal device comprising not only those elements but also other elements being not explicitly enumerated, or even those elements being inherently contained in the process, the method, the product, or the terminal device. An element defined by a sentence like "comprising one/a..." may not exclude an existence of other similar elements in the process, the method, the product, or the terminal device comprising the elements, unless otherwise further limited.

The method and the device for asynchronously chorusing provided by the present disclosure are described in detail as above. Particular embodiments are used herein for illustration of the principle of the present disclosure and its embodiments, and the description of the above embodiments is only for facilitating the understanding of the method and device of the present invention, the scope of which is defined by the appended claims.

## Claims

1. A method for asynchronously chorusing, **characterized in that** the method comprises:
- a terminal requesting a first accompanying music file, said terminal being the terminal of a user wanting to take part in chorusing;
- the terminal downloading said first accompanying music file from a server;
- the terminal collecting audio information of a user of said terminal;
- forming an audio file corresponding to said terminal by encoding said collected audio information with said first accompanying music file;
the method being **characterized in that** it further comprises :
- marking (101) an unmarked, portion in the audio file as a chorused portion, this step including obtaining the position of said audio information in the audio file; analyzing a portion formed by said encoding collected audio information with the first accompanying music file; and marking said portion in the audio file as the chorused portion; and
- determining (102) the marked audio file as a second accompanying music file, the second accompanying music file being downloadable form said server upon request by a user of a terminal who wants to take part in chorusing,
the method further comprising:
marking paragraphs for chorusing in an initial accompanying music file, and sending the marked initial accompanying music file to a terminal that requests the first accompanying music file to take part in chorusing;
wherein the marked initial accompanying music file comprises at least one paragraph,
the method being **characterized in that** the step of marking paragraphs for chorusing in the initial accompanying music file comprises:
reading a time interval between every two words in the initial accompanying music file;
comparing the time interval with a preset threshold value; and
marking a paragraph as being finished between two words when the time interval between two words is large than the preset threshold value.

2. The method according to claim 1, wherein the method further comprises:
sending (204) the second accompanying music file to a terminal that requests the second accompanying music file to take part in chorusing.

3. The method according to claim 1, wherein the step of marking said unmarked portion in the audio file as the chorused portion comprises:
changing colors of displayed words corresponding to said unmarked, portion in the audio file;
and/or,
using words to mark the unmarked, portion in the audio file in a name of the audio file.

4. The method according to claim 1, wherein after receiving the audio file uploaded from the terminal that requests the first accompanying music file to take part in chorusing, the method further comprises:
receiving (205) volume information belonging to the collected audio information in the audio file uploaded from the terminal that requests the first accompanying music file to take part in chorusing; and
sending (206) the volume information to the terminal that requests the second accompanying music file to take part in chorusing, and prompting a user to use the volume to perform chorusing.

5. A device for asynchronously chorusing, **characterized in that** the device comprises:
a first marking module (601, 703) including: a first obtaining sub-module (7031) configured to obtain an audio information position in an audio file received from a terminal of a user; a first analyzing sub-module (7032) configured to analyze a portion formed by encoding collected audio information of said user with a first accompanying music file requested by said user to take part in chorusing and, a first mixing marking sub-module (7033) configured to mark said portion in the audio file as a chorused portion; and
a determining module (602, 704) configured to determine the marked audio file as a second accompanying music file;
the second accompanying music file being downloadable form said server upon request by a user of a terminal who wants to take part in chorusing wherein the device further comprises:
a second marking module (701) configured to mark paragraphs for chorusing in an initial accompanying music file, and a sending module (702) configured to send the marked initial accompanying music file to a terminal that requests the first accompanying music file to take part in chorusing;
wherein the marked initial accompanying music file comprises at least one paragraph,
the device being **characterized in that** the second marking module (701) comprises:
a reading sub-module (7011) configured to read a time interval between every two words in the initial accompanying music file;
a comparing sub-module (7012) configured to compare the time interval with a preset threshold value; and
a word-marking sub-module (7013) configured to mark a paragraph as being finished between two words when the time interval between two words is large than the preset threshold value.

6. A computer program product stored on a computer usable medium, comprising computer-readable program means for causing an electronic device to implement the method according to any one of claims 1 to 4.

## Patentansprüche

1. Verfahren zum asynchronen Singen im Chor, **dadurch gekennzeichnet, dass** das Verfahren umfasst:
- Anfordern durch ein Endgerät einer ersten Begleitmusikdatei, wobei das Endgerät das Endgerät eines Benutzers ist, der an dem Im-Chor-Singen teilnehmen will,
- Herunterladen durch das Endgerät der ersten Begleitmusikdatei von einem Server,
- Sammeln durch das Endgerät von Audioinformationen eines Benutzers des Endgeräts,
- Bilden einer Audiodatei, die dem Endgerät entspricht, durch Codieren der gesammelten Audioinformationen mit der ersten Begleitmusikdatei,
wobei das Verfahren **dadurch gekennzeichnet ist, dass** es ferner umfasst:
- Markieren (101) eines nicht markierten Abschnitts in der Audiodatei als einen Im-Chor-Singen-Abschnitt, wobei dieser Schritt Erhalten der Position der Audioinformationen in der Audiodatei, Analysieren eines Abschnitts, der durch das Codieren der gesammelten Audioinformationen mit der ersten Begleitmusikdatei gebildet wurde, und Markieren des Abschnitts in der Audiodatei als den Im-Chor-Singen-Abschnitt umfasst und
- Bestimmen (102) der markierten Audiodatei als eine zweite Begleitmusikdatei, wobei die zweite Begleitmusikdatei auf Anforderung eines Benutzers eines Endgeräts, der an dem Im-Chor-Singen teilnehmen will, von dem Server herunterladbar ist,
wobei das Verfahren ferner umfasst:
Markieren von Absätzen für ein Im-Chor-Singen in einer anfänglichen Begleitmusikdatei und Senden der markierten anfänglichen Begleitmusikdatei an ein Endgerät, das die erste Begleitmusikdatei anfordert, um an dem Im-Chor-Singen teilzunehmen,
wobei die markierte erste Begleitmusikdatei mindestens einen Absatz umfasst,
wobei das Verfahren **dadurch gekennzeichnet ist, dass** der Schritt des Markierens von Absätzen für ein Im-Chor-Singen in der anfänglichen Begleitmusikdatei umfasst:
Lesen eines Zeitintervalls zwischen jeweils zwei Wörtern in der ursprünglichen Begleitmusikdatei,
Vergleichen des Zeitintervalls mit einem voreingestellten Schwellenwert und
Markieren eines Absatzes zwischen zwei Wörtern als abgeschlossen, wenn das Zeitintervall zwischen zwei Wörtern größer als der voreingestellte Schwellenwert ist.

2. Verfahren nach Anspruch 1, wobei das Verfahren ferner umfasst:
Senden (204) der zweiten Begleitmusikdatei an ein Endgerät, das die zweite Begleitmusikdatei anfordert, um an dem Im-Chor-Singen teilzunehmen.

3. Verfahren nach Anspruch 1, wobei der Schritt des Markierens des nicht markierten Abschnitts in der Audiodatei als den Im-Chor-Singen-Abschnitt umfasst:
Ändern von Farben angezeigter Wörter, die dem nicht markierten Teil in der Audiodatei entsprechen,
und/oder
Verwenden von Wörtern zum Markieren des nicht markierten Teils in der Audiodatei in einem Namen der Audiodatei.

4. Verfahren nach Anspruch 1, wobei nach Empfang der Audiodatei, die von dem Endgerät hochgeladen wurde, das die erste Begleitmusikdatei anfordert, um an dem Im-Chor-Singen teilzunehmen, das Verfahren ferner umfasst:
Empfangen (205) von Lautstärkeinformationen, die zu den gesammelten Audioinformationen in der Audiodatei gehören, die von dem Endgerät hochgeladen wurde, das die erste Begleitmusikdatei anfordert, um an dem Im-Chor-Singen teilzunehmen, und
Senden (206) der Lautstärkeinformation an das Endgerät, das die zweite Begleitmusikdatei anfordert, um an dem Im-Chor-Singen teilzunehmen, und Auffordern eines Benutzers, die Lautstärke zur Durchführung des Im-Chor-Singen zu verwenden.

5. Vorrichtung für ein asynchrones Im-Chor-Singen, **dadurch gekennzeichnet, dass** die Vorrichtung umfasst:
ein erstes Markierungsmodul (601, 703), aufweisend: ein erstes Erfassungs-Submodul (7031), das konfiguriert ist, eine Audioinformationsposition in einer Audiodatei zu erhalten, die von einem Endgerät eines Benutzers empfangen wurde, ein erstes Analyse-Submodul (7032), das konfiguriert ist, einen Abschnitt zu analysieren, der gebildet ist durch Codieren der gesammelten Audioinformationen des Benutzers mit einer ersten Begleitmusikdatei, die von dem Benutzer angefordert wurde, um an dem Im-Chor-Singen teilzunehmen, und ein erstes Mischungs-Markierungs-Submodul (7033), das konfiguriert ist, den Abschnitt in der Audiodatei als einen Im-Chor-Singen-Abschnitt zu markieren, und
ein Bestimmungsmodul (602, 704), das konfiguriert ist, die markierte Audiodatei als zweite Begleitmusikdatei zu bestimmen,
wobei die zweite Begleitmusikdatei auf Anforderung eines Benutzers eines Endgeräts, der an dem Im-Chor-Singen teilnehmen will, von dem Server herunterladbar ist,
wobei die Vorrichtung ferner umfasst:
ein zweites Markierungsmodul (701), das konfiguriert ist, Absätze für ein Im-Chor-Singen in einer anfänglichen Begleitmusikdatei zu markieren, und ein Sendemodul (702), das konfiguriert ist, die markierte anfängliche Begleitmusikdatei an ein Endgerät zu senden, das die anfängliche Begleitmusikdatei anfordert, um an dem Im-Chor-Singen teilzunehmen,
wobei die markierte anfängliche Begleitmusikdatei mindestens einen Absatz umfasst,
wobei die Vorrichtung **dadurch gekennzeichnet ist, dass** das zweite Markierungsmodul (701) umfasst:
ein Lese-Submodul (7011), das konfiguriert ist, ein Zeitintervall zwischen jeweils zwei Wörtern in der anfänglichen Begleitmusikdatei zu lesen,
ein Vergleichs-Submodul (7012), das konfiguriert ist, das Zeitintervall mit einem voreingestellten Schwellenwert zu vergleichen, und
ein Wortmarkierungs-Submodul (7013), das konfiguriert ist, einen Absatz zwischen zwei Wörtern als abgeschlossen zu markieren, wenn das Zeitintervall zwischen zwei Wörtern größer als der voreingestellte Schwellenwert ist.

6. Computerprogrammprodukt, das auf einem von einem Computer verwendbaren Medium gespeichert ist, umfassend computerlesbare Programmmittel zum Bewirken, dass eine elektronische Vorrichtung das Verfahren nach einem der Ansprüche 1 bis 4 implementiert.

## Revendications

1. Procédé pour chanter en choeur de manière asynchrone, **caractérisé en ce que** le procédé comprend :
- la demande, par un terminal, d'un premier fichier de musique d'accompagnement, ledit terminal étant le terminal d'un utilisateur souhaitant prendre part à un choeur ;
- le téléchargement, par le terminal, dudit premier fichier de musique d'accompagnement à partir d'un serveur ;
- la collecte, par le terminal, d'informations audio d'un utilisateur dudit terminal ;
- la formation d'un fichier audio correspondant audit terminal en encodant lesdites informations audio collectées avec ledit premier fichier de musique d'accompagnement ;
le procédé étant **caractérisé en ce qu'**il comprend en outre :
- le marquage (101) d'une partie non marquée dans le fichier audio en tant que partie chantée en choeur, cette étape comprenant l'obtention de la position desdites informations audio dans le fichier audio ; l'analyse d'une partie formée par ledit encodage des informations audio collectées avec le premier fichier de musique d'accompagnement ; et le marquage de ladite partie dans le fichier audio en tant que partie chantée en choeur ; et
- la détermination (102) du fichier audio marqué en tant que deuxième fichier de musique d'accompagnement, le deuxième fichier de musique d'accompagnement pouvant être téléchargé à partir dudit serveur sur demande par un utilisateur d'un terminal qui souhaite prendre part à un choeur,
le procédé comprenant en outre :
le marquage des paragraphes pour chanter en choeur dans un fichier de musique d'accompagnement initial, et l'envoi du fichier de musique d'accompagnement initial marqué à un terminal qui demande le premier fichier de musique d'accompagnement pour prendre part au choeur ;
dans lequel le fichier de musique d'accompagnement initial marqué comprend au moins un paragraphe,
le procédé étant **caractérisé en ce que** l'étape de marquage des paragraphes pour chanter en choeur dans le fichier de musique d'accompagnement initial comprend :
la lecture d'un intervalle de temps à chaque fois entre deux mots dans le fichier de musique d'accompagnement initial ;
la comparaison de l'intervalle de temps avec une valeur de seuil prédéterminée ; et
le marquage d'un paragraphe comme étant fini entre deux mots lorsque l'intervalle de temps entre deux mots est plus grand que la valeur de seuil prédéterminée.

2. Procédé selon la revendication 1, dans lequel le procédé comprend en outre :
l'envoi (204) du deuxième fichier de musique d'accompagnement à un terminal qui demande le deuxième fichier de musique d'accompagnement pour prendre part à un choeur.

3. Procédé selon la revendication 1, dans lequel l'étape de marquage de ladite partie non marquée dans le fichier audio en tant que partie chantée en choeur comprend :
le changement des couleurs des mots affichés correspondant à ladite partie non marquée dans le fichier audio ;
et/ou,
l'utilisation de mots pour marquer la partie non marquée dans le fichier audio dans un nom du fichier audio.

4. Procédé selon la revendication 1, dans lequel, après la réception du fichier audio téléchargé à partir du terminal qui demande le premier fichier de musique d'accompagnement pour prendre part à un choeur, le procédé comprend en outre:
la réception (205) d'informations de volume appartenant aux informations audio collectées dans le fichier audio téléchargé à partir du terminal qui demande le premier fichier de musique d'accompagnement pour prendre part au choeur ; et
l'envoi (206) des informations de volume au terminal qui demande le deuxième fichier de musique d'accompagnement pour prendre part à un choeur, et l'incitation d'un utilisateur à utiliser le volume pour prendre part au choeur.

5. Dispositif pour chanter en choeur de manière asynchrone, **caractérisé en ce que** le dispositif comprend :
un premier module de marquage (601, 703) comprenant : un premier module secondaire d'obtention (7031) configuré pour obtenir une position d'informations audio dans un fichier audio reçu d'un terminal d'un utilisateur ; un premier module secondaire d'analyse (7032) configuré pour analyser une partie formée en encodant des informations audio collectées dudit utilisateur avec un premier fichier de musique d'accompagnement demandé par ledit utilisateur pour prendre part à un choeur et, un premier module secondaire de marquage de mixage (7033) configuré pour marquer ladite partie dans le fichier audio en tant que partie chantée en choeur ; et
un module de détermination (602, 704) configuré pour déterminer le fichier audio marqué en tant que deuxième fichier de musique d'accompagnement ;
le deuxième fichier de musique d'accompagnement pouvant être téléchargé à partir dudit serveur sur demande par un utilisateur d'un terminal qui souhaite prendre part à un choeur,
dans lequel le dispositif comprend en outre :
un deuxième module de marquage (701) configuré pour marquer des paragraphes pour chanter en choeur dans un fichier de musique d'accompagnement initial, et un module d'envoi (702) configuré pour envoyer le fichier de musique d'accompagnement initial marqué à un terminal qui demande le premier fichier de musique d'accompagnement pour prendre part au choeur ;
dans lequel le fichier de musique d'accompagnement initial marqué comprend au moins un paragraphe,
le dispositif étant **caractérisé en ce que** le deuxième module de marquage (701) comprend :
un module secondaire de lecture (7011) configuré pour lire un intervalle de temps à chaque fois entre deux mots dans le fichier de musique d'accompagnement initial ;
un module secondaire de comparaison (7012) configuré pour comparer l'intervalle de temps avec une valeur de seuil prédéterminée ; et
un module secondaire de marquage de mot (7013) configuré pour marquer un paragraphe comme étant fini entre deux mots lorsque l'intervalle de temps entre deux mots est plus grand que la valeur de seuil prédéterminée.

6. Produit-programme d'ordinateur mémorisé sur un support utilisable par un ordinateur, comprenant des moyens formant programme pouvant être lu par un ordinateur pour amener un dispositif électronique à mettre en oeuvre le procédé selon l'une quelconque des revendications 1 à 4.
